Europäisches Patentamt

(19) European Patent Office

Office européen des brevets

(11) Publication number: **0 297 690 B1**

(12) **EUROPEAN PATENT SPECIFICATION**

(45) Date of publication of patent specification:
02.05.91 Bulletin 91/18

(51) Int. Cl.⁵: **A23D 7/00, A23D 7/02, A23C 15/16**

(21) Application number: 88201375.8

(22) Date of filing: 01.07.88

(54) Edible spread and process for the preparation thereof.

(30) Priority: 02.07.87 US 69058
02.07.87 US 69059

(43) Date of publication of application:
04.01.89 Bulletin 89/01

(45) Publication of the grant of the patent:
02.05.91 Bulletin 91/18

(84) Designated Contracting States:
AT BE CH DE ES FR GB GR IT LI NL SE

(56) References cited:
EP-A- 0 101 104
EP-A- 0 101 105
EP-A- 0 211 986

(73) Proprietor: UNILEVER NV
Burgemeester s'Jacobplein 1 P.O. Box 760
NL-3000 DK Rotterdam (NL)
BE CH DE ES FR GR IT LI NL SE AT

Proprietor: UNILEVER PLC
Unilever House Blackfriars P.O. Box 68
London EC4P 4BQ (GB)
GB

(72) Inventor: Izzo, Henry J.
518 Golf Links Drive
Bridgewater New Jersey 08807 (US)
Inventor: Pincus, Stephen M.
4 Arlington Drive
Marlboro New Jersey 07746 (US)
Inventor: Theiler, Jane B.
50 South Colonial Drive
Harrington Park New Jersey 07640 (US)
Inventor: Cirigliano, Michael C.
23 Seventh Street
Cresskill New Jersey 07626 (US)

(74) Representative: Mulder, Cornelis Willem
Reinier, Dr. et al
UNILEVER N.V. Patent Division P.O. Box 137
NL-3130 AC Vlaardingen (NL)

## Description

The present invention relates to an edible spread having a continuous fat phase and to a process for the preparation thereof.

Examples of an edible spread are butter and margarine. Such products contain a discontinuous aqueous phase in an amount usually of about 15-20% by weight. Similar spreads, but containing a higher amount of discontinuous aqueous phase, for example of 60% by weight or even more, are commonly referred to as, for example, "low-calorie spreads" or "low-fat spreads".

It becomes increasingly difficult to prepare a high quality product as the mass fraction of discontinuous aqueous phase is enlarged.

More particularly, as the water content increases, it becomes more difficult to obtain the required physical stability. To prevent coalescence of dispersed water droplets and thereby obtain a stable product, GB 1,094,268 suggests incorporation of a thickening agent in the aqueous phase and an emulsifier in the fat phase.

The high water content, however, gives rise not only to a physical stability problem, but also tends to a watery organoleptic impression. For this reason, and, inter alia, to improve the flavour release, milk proteins are often included. However, the presence of milk protein makes it more difficult to obtain a plastic dispersion that is both physically and microbiologically stable. Often a hydrocolloid is included to improve the physical stability. To prevent microbiological deterioration, it has been suggested that preservatives be included and the pH be lowered. However, high concentrations of preservatives are often disliked by consumers, and high amounts of acid can adversely affect the taste of the product.

GB 1,450,269 is concerned with low-calorie spreads, in particular spreads of which the fat portion comprises a substantial amount of butterfat. It is advised to include in the aqueous phase, milk protein and hydrocolloid. The last above-mentioned patent discloses that, for microbiological reasons, the pH of the aqueous phase should be less than 6.0, but on the other hand, for organoleptic reasons, should not be below 4.5, preferably not below 4.8. The specification advises to physically stabilize the low-fat spread by employing hydrocolloid to keep proteins soluble, mixtures of pectin and carrageenan being preferred. To obtain a stable product, partial glycerides must again be included as emulsifier.

GB 1,450,269 discloses a process for preparing a low-fat spread wherein butter is heated to 80°C, cooled to 35°C with an aqueous phase containing milk protein, hydrocolloid, salt and partial glycerides at 35°C. The pH is adjusted to, for instance, 5.15-5.3 and the admixture is passed through a series of scraped surface heat exchangers of the Votator (Registered Trade Mark) A-unit type.

U.S. 4,103,037 addresses the problem that the high water content of reduced-fat spreads adversely affects organoleptic properties and/or the stability of such products, compared with butter or margarine, and that the incorporation of protein in such products causes destabilization, both physically and microbiologically. According to that specification, gelling agent having a slip melting point of 25-35°C, e.g. gelatin or Danish agar, and non-gelling protein, e.g. milk protein, should be included in the aqueous phase composition in a specified ratio, under conditions such that formation of undissolved portein particles of a major dimension of more than 5 microns is avoided. It is advised to include, as emulsifier, monoglycerides and, for bacteriological reasons, to adjust the pH to, preferably, 4.6-5.8. To prevent the protein from flocculating, which, it is said, may easily occur at the lower pH values, it is further advised to first prepare separate solutions of gelling agent and protein, the solution of gelling agent being substantially protein-free and having a pH of 1-7, and the solution of protein being substantially neutral, including in the protein solution a deflocculation agent, e.g. xanthan gum, locust bean gum or sodium carboxy methyl cellulose, then combining the solution of gelling agent and the proteinaceous solution containing the deflocculation agent, and subsequently adjusting the pH to the desired value.

U.S. 4,389,426 discloses that the organoleptic properties of low-fat spreads are often poor, owing to the high water content, and that it is commonplace to add proteins to the aqueous phase to improve this. To counteract the destabilizing effect of milk protein, gelling agents are also incorporated in the aqueous phase. The mechanism of the counteraction is assumed to involve encapsulating or complexing of the protein with the gelling agent, binding of the water of the aqueous phase and increasing its viscosity.

The above-mentioned specification advocates to use as gelling agent, instead of the expensive gelatin, a combination of a colloid which forms a linear gel structure and a colloid capable of forming a spherical gel structure. For bacteriological reasons it is recommended that the pH should preferably be in the range from 4.6 to 5.8.

EP 0,011,891 mentions that it has been suggested that the dispersed aqueous phase of spreads be thickened with, for example, fats, thickening agents like gums or proteins, and that in such products frequently problems of diminished organoleptic qualities, insufficient microbiological keeping qualities and/or insufficient emulsion stability were observed. The specification teaches that in particular low-fat spreads, which, it is said, frequently have too watery a taste, can be improved by incorporating in the continuous plastic fat phase a dis-

2

continuous aqueous phase consisting of non-gelled, finely dispersed droplets having a size range from 1 to 5 microns and a further discontinuous aqueous phase consisting of coarse, gelled droplets having a diameter in the range from 10 to 20 microns. Either one or both of the discontinuous aqueous phases may comprise protein, in particular milk protein. It is yet again advised to include emulsifier, e.g. phosphatides and/or partial glycerides.

The products obtained according to the above-mentioned patents are not optimal. They present various compromises between the desired properties regarding (a) physical stability, (b) organoleptic characteristics and (c) microbiological keepability. Compared with butter or premium margarine, the quality of the low-fat spreads tends to be lower with respect to at least one of these properties, and usually with respect to two or three of them.

U.S. Patent 4,520,037 aims at improving the microbiological stability of low-fat spreads. The proposed product is a fat-continuous emulsion which comprises at least two distinct discontinuous aqueous phases, each of which should comprise a microbiologically labile nutrient such as milk protein, vegetable protein, glucose, lactose or partially hydrolyzed starch. Furthermore, an effective amount of one or more ingredients that inhibit bacterial growth, e.g. acids, salts or preservatives, should be concentrated in each of the two aqueous phases. The product may contain more than two distinct dispersed aqueous phases, which additional aqueous phases may also contain nutrients. Any nutrients present, however, should be protected, either by an ingredient inhibiting bacterial growth as described above or by ensuring that the size of the aqueous phase droplets that contain the nutrient is less than 5 microns or even less than 2 microns, under which conditions growth of contaminating micro-organisms is retarded or prevented.

In order to be able to prepare a stable product and to prevent intermingling and coalescence of the differently formulated aqueous phase drops from occurring, it is advised to include an emulsifier. A strong preference is expressed for emulsifiers of the polyglycerol fatty acid ester type.

A number of documents has been published that describe the preparation of spreads using butter as starting material.

U.S. Patent 4,555,411 aims at facilitating the preparation of fat-continuous low-fat spreads. It teaches how to prepare such spreads by forming an emulsion and shearing and cooling it, using apparatus that is coated with, or produced from, hydrophobic material. The use of, for example, Votator equipment coated with hydrophobic material causes phase inversion of, for example, dairy cream to occur more easily. Thus, according to the specification, low-calorie butter can be prepared by phase inverting dairy cream without having to use non-dairy emulsifiers.

It is described how such a product can be prepared from a composition of melted butter, mixed with, inter alia, gelatin and skim milk. The water-continuous emulsion is turned into a fat-continuous low-calorie butter by rapid cooling and inverting the cream by means of an A-unit and a crystallizer unit in which very high shear is applied, both of which units have been provided with a hydrophobic coating by flushing with fat.

U.S. Patent 1,024,009 describes a butter substitute made by combining milk, gelatin and butter and by emulsifying the mixture to obtain a homogeneous plastic mass. The gelatin is stated to be an emulsifying agent, and the instruction is to use "one heaped teaspoonful in one pint of whole milk". After combining the ingredients, the mixture is heated to melt the butter, and the mixture is then cooled with agitation.

In addition, for many years the Knox Gelatin Company has distributed a recipe book which includes a kitchen recipe for "stretching" butter in which plain, unflavoured gelatin is softened in cold water, dissolved thoroughly over hot water, mixed with either fresh or evaporated milk, and the solution then whipped into softened but unmelted butter with an electric mixer until a stable mixture is formed. The mixture is then placed in a refrigerator until firm.

UK Patent Application GB 2,021,140 A, published on November 28, 1979, describes a dairy blend comprising a homogeneous mixture of butter and a vegetable oil and having mixed therewith an aqueous gelatin solution. The product is made by softening butter to a temperature of 30°C to 35°C without over-softening, mixing with the softened butter a partially gelled solution of gelatin and emulsifying agent, allowing the mixture to stand, and thereafter adding the vegetable oil with continuous mixing. The solution of gelatin and emulsifier may further contain milk protein and, for example, salt. Without the addition of the vegetable oil, the product is said not to be spreadable straight out of the refrigerator.

The reduced-fat spreads prepared according to these procedures using butter as starting material have distinct disadvantages. In particular, the storage properties are unsatisfactory. For example, the product made following the Knox Gelatin recipe will keep only about a week, even in a refrigerator.

We have now found that spreads, and in particular spreads with a fat content lower than butter or margarine, can be obtained that have good storage properties, both physically and microbiologically, and that have favourable organoleptic properties.

Products according to the present invention comprise two essentially separate water phases, one being unmodified butter serum, the other being a milk protein-free, hydrocolloid-containing phase. Such products are

3

prepared by careful admixing of butter and a low pH water phase, preferably in the absence of any added emulsifier.

According to a first aspect of the present invention there is provided a process for preparing an edible spread having a continuous fat phase including the steps of a) forming an admixture of

i) an edible plastic dispersion (A) comprising a continuous fat phase and a discontinuous aqueous phase, which aqueous phase consists essentially of unmodified butter serum, and,

ii) an edible aqueous composition (B) having a pH at below 4.7 and containing hydrocolloid, which aqueous composition is substantially free from milk and soy protein, and b) forming a product having a continuous fat phase by subjecting the admixture to a working treatment at a temperature at which the fat phase of the plastic dispersion (A) remains plastic.

We have found that the product so prepared does not taste sour despite the low pH of the aqueous composition (B). We have further found that in this way physically stable spreads can be prepared without the need to use high amounts of added emulsifiers. As will be described in more detail below, in certain cases the incorporation of such emulsifiers can be dispensed with entirely. The use of substantial amounts of such emulsifiers is undesirable because they adversely affect the organoleptic properties. They slow down the breakdown of the dispersion in the mouth and thereby have a negative influence on the flavour release. Moreover, the commonly used emulsifiers have an unpleasant flavour which is noticeable in products containing substantial amounts of such emulsifiers. We have furthermore found that with this process, the microbiological keepability of the product is improved. As will be described in more detail below, it is preferred to include preservatives ; however, very good microbiological stability is obtained within a relatively low amount of any such preservative incorporated. Thus, low-fat spreads with a shelf life substantially similar to that of butter or margarine can be prepared using only minimal amounts of preservative.

We have also found that the products so obtained evidence a level of butter flavour that is nearly indistinguishable from normal butter. It has been the experience of those skilled in the art that products designed to extend butter demonstrate a reduction in butter flavour because of the dilution effect. Most low-fat products already on the market remedy this defect by adding artificial flavour to make the product more nearly equivalent to normal butter in flavour type and level.

According to a second aspect the present invention provides a low-fat butter spread having a continuous fat phase and comprising a first discontinuous aqueous phase consisting essentially of unmodified butter serum, and a second discontinuous aqueous phase having a pH at or below 4.7 and containing hydrocolloid, the second aqueous phase being substantially free of milk protein and soy proteins.

Further, in accordance with a preferred embodiment, the droplets of the continuous aqueous phase of the plastic dispersion (A) have a volume weighted mean diameter that is less than 15 microns, more preferably in the range of 0.1 to 10 microns and, most preferably, in the range of 1 to 5 microns. Aqueous phase (B) may be present as a continuous phase, in which case the product can be described as bi-continuous, or it may be present as a discontinuous phase. In the latter products, the dispersed droplets of the aqueous composition (B) have a volume weighted mean diameter that is less than 40 microns, and more preferably in the range of 1-30 microns.

Such spreads can be prepared using the process according to the present invention described above.

The present product can be prepared according to an embodiment of the present process, wherein the admixture formed in step (a) is a dispersion having a continuous fat phase. This can, for example, be achieved by forming the admixture with the use of equipment that, effectively, mixes the aqueous composition (B) into dispersion (A) rather than the other way around.

Structurally, products according to the present invention, thus prepared, will usually be composed predominantly of a continuous fat phase and two distinct discontinuous aqueous phases. The continuous fat phase will comprise both liquid oil and solid fat. It will include substantially all fat contained in the product. One of the discontinuous aqueous phases will be composed of droplets having a composition that will be essentially similar to that of the aqueous composition (B) that was employed in the process, whereas the other aqueous phase will essentially consist of the discontinuous aqueous phase of the plastic dispersion (A) that was used.

In the preferred embodiment utilizing butter, one of the effects of having the two separate phases in the products made according to this invention is that it contains, in undiluted form, the normal aqueous butter phase and it is then present in the mouth, on eating the product, to provide the full impact of a complete butter flavour. Because there is no molecular dilution, it is thus possible to extend the spread by adding a non-fat aqueous phase while still retaining the potential flavour impact provided by the undiluted butter serum. This makes possible the realization of a high quality flavour product without the necessity of adding artificial flavours.

According to a preferred embodiment, in step (a) of the present process an admixture having a water-continuous phase is formed. This can be done by dispersing plastic dispersion (A) in aqueous composition (B), for example with the use of a static mixer. The admixture then essentially has a water-in-oil-in-water (w/o/w) structure.

In step (b) a product having a continuous fat phase is then formed by imparting sufficient energy to the admixture, while ensuring that it continues to contain a not unsubstantial amount of solid fat, for example at least about 2%, calculated on the weight of the total composition. Preferably, the continuous fat phase is thus brought about by working the admixture, in particular by passing it through a high shear mixer.

Structurally rather complex products can be obtained. For example, dispersed within the continuous fat phase there may be regions comprising aqueous phase having, for example, a composition similar to that of the aqueous phase composition (B), which regions, in turn, contain, dispersed therein, small oil globules or even parts of water-in-oil structure, originating from plastic dispersion (A). Thus, the resulting structure may be o/w/o, or even w/o/w/o. The structure of the product may also be a combination of such structure. It may, for example, be predominantly a w/o structure, but which has some o/w/o character.

Furthermore, there need not be a complete phase inversion. By causing only a partial inversion to occur, a bi-continuous product having both a continuous fat phase and a continuous aqueous phase, the latter being a composition similar to aqueous composition (B), can be obtained.

The product may furthermore contain, dispersed therein, some aqueous droplets comprising ingredients originating from both aqueous composition (B) and from the aqueous phase of plastic dispersion (A). Such intermixing of aqueous phases is, however, not preferred, nor is it likely to happen in the present process to any considerable extent. To prevent such intermixing from happening to a significant extent, however, we believe it to be necessary that step (b) of the process be carried out such that the butterfat continues to be plastic. One might have expected that, to prepare a product with distinct aqueous phases, it is necessary to treat the composition, from the stage that it contains the two aqueous phases, very carefully and, in particular, that no high shear should be applied. Such belief is expressed, for example, in U.S. 4,520,037 : the two cooled, texturized emulsions are carefully mixed, using a static mixer. We have found, however, that in the present process, for example when using butter as plastic dispersion (A), very high shear may be applied without losing the advantages of the distinct aqueous phases.

According to a preferred embodiment of the present process, the plastic dispersion (A) is margarine or butter of a pumpable plastic consistency.

Particularly advantageous results can be obtained by using butter as plastic dispersion (A), forming an admixture having a water-continuous phase in step (a) and causing the admixture to form an oil-continuous dispersion in step (b) of the process. The dispersion formation can suitably be brought about by passage through a high shear mixer. A product with excellent butter-like properties can thus be obtained.

We have found that a product with good butter-likeness can be obtained despite the fact that high shear conditions are applied. One would have thought that, when using butter as a starting material in order to maintain the butter-likeness, the butter should be handled carefully, and in particular no high shear should be applied. Such belief is, for example, expressed in EP 0,199,397, wherein it is advised to employ a special type, relatively low shear mixer, a so-called cavity transfer mixer, to mix, for example, butter and margarine, to prepare "melange" with butter-like properties. However, we have found that in the present process high shear such as, for example, occurs in a normally operated A-unit or even higher, may be applied without losing the butter-like properties.

It is to be understood, however, that it is not a necessity to employ high shear in the present process. For example, if in step (a) an admixture is formed that has a continuous fat phase, it may be appropriate to employ in step (b) a relatively low shear mixer to effect the working treatment, for example a slowly rotating C-unit, a static mixer or a cavity transfer mixer as described in EP 0,199,397 cited above. The use of relatively low shear may in particular be suitable in case plastic dispersion (A) is relatively soft and/or contains a relatively coarse discontinuous aqueous phase, as often occurs in, for example, spreads with a reduced fat content.

As plastic dispersion (A) a variery of products may be employed. For example, common margarine or butter or a spread with a higher or a lower fat content may be employed. Especially beneficial results are obtained with the use of products such as margarine and, particularly, butter. The dispersion used as dispersion (A) may have been prepared beforehand and stored for some time. If appropriate, it can be softened by heating before use in the present process. Alternatively, a freshly prepared dispersion can be employed. Immediately after production, plastic dispersions of the present type are soft, because they are often, depending on the process employed, in an undercooled state, i.e. crystallization and formation of solid fat have not yet been completed.

The spreads according to this invention may vary in fat content and products having as little as 26% fat have been prepared with the assistance of emulsifiers. A preferred range is 30-65% fat. The fat content is varied in accordance with the fat content of plastic dispersion (A), as well as the amount of plastic dispersion (A) employed in proportion to aqueous composition (B). The plastic dispersion (A) may contain from 40-95% by weight of fat, more preferably from 70-90% by weight.

Suitable spreads have been prepared according to this invention by forming admixtures comprising 30-80% by weight of edible plastic dispersion (A) and 70-20% by weight of aqueous composition (B). It is preferred to form admixtures comprising 40-60% by weight of edible plastic dispersion (A) and 60-40% by weight of aqueous composition (B).

It is also preferred that, when forming admixtures of dispersion (A) and aqueous composition (B), as well as in subsequent processing step (b) and during packing, that the temperature of the admixture and dispersion be maintained below 30°C. Thus, the products of step (a) and step (b) are at a temperature below 30°C.

It is further preferred that the temperature be maintained during processing to ensure that the final product has a temperature of 70°C to 30°C on completion thereof.

To prepare spreads of optimal quality, we have found it to be necessary to subject the admixture of edible plastic dispersion (A) and aqueous composition (B) to a working treatment to form the product having a continuous fat phase under conditions such that the fat phase of plastic dispersion (A) remains plastic.

We have found, for example, that according to our process an excellent product can be prepared using freshly churned butter as edible plastic dispersion (A) and an aqueous gelatin solution acidified to pH 4 and further containing only salt and, as preservatives, benzoate and sorbate. If, however, during the working treatment the temperature was allowed to rise for a sufficiently long time so that the fat was no longer plastic and all crystallized fat had essentially melted, a proper product could no longer readily be obtained by continuing working the admixture while cooling it to cause recrystallization of fat.

Since melting of fat does not occur instantaneously, relatively high temperatures can be tolerated during short periods of time during the working treatment, but in order not to put the quality of the resulting product at risk, it is preferred to control the temperature of the admixture throughout the entire working treatment of step (b) so that the fat will remain plastic even if kept at that temperature for prolonged periods of time, e.g. for 10 minutes or so. The fat phase is considered to be plastic as long as it contains a not insignificant amount of solid fat, e.g. at least about 2%, calculated on the total weight of the admixture. Preferably, the temperature during the working treatment of step (b) is controlled so that the admixture contains at least 4% by weight of crystallized fat. The amount of solid fat present can suitably be determined by means of NMR, see Fette, Seifen, Anstrichmittel 80 (1980), 180-186. In this specification no distinction is made between solid fat and crystallized fat. Although, strictly speaking, not all solid fat is necessarily present in the crystalline state, in the context of the present application such distinction is not relevant. The relevant quantity is the amount of solid fat. For convenience sake, it is assumed that all solid fat is present in the form of crystals, and the terms are used interchangeably. Throughout this specification the terms oil and fat are used interchangeably.

The term hydrocolloid is used to indicate gelling and thickening agents as described in Zeitschrift für Lebensmitteltechnologie und Verfahrenstechnik 32 (1981), 6, pages 253-256, and includes gelatin and polysaccharides such as native and modified starches, cellulose derivatives, and natural hydrocolloids such as carrageenan, Danish agar, agar, pectin, algin, alginates, gum arabic and the products of fermentation, such as xanthan gum and gellan gum.

The term milk protein is used in its common meaning and indicates proteins in denatured or undenatured form as are present in milk or derived therefrom. It includes the proteins provided by milk, skim milk, buttermilk, and the like, either as such or in concentrated or powdered form, and fractions and modified forms thereof, such as acid casein, caseinates and whey proteins. Similarly, by soy protein is meant the protein obtained from soy bean and fractions thereof, either in natural or denatured form.

The volume weighted mean diameter and the number weighted mean diameter of the aqueous droplets in the product, the so-called D (3,3) and D (0,0) values, respectively, can suitably be estimated by means of NMR [see J. Colloid and Interface Science (1972), 40 (2), 206-218 and (1983), 93 (2), 521-529] using a log-normal distribution as is commonly employed for particle size analysis. The properties of the product depend more strongly on the larger aqueous phase droplets than on the smaller ones. Therefore, the volume weighted mean diameter of the aqueous droplets is a more relevant property than the number weighted mean diameter. Alternatively, the volume weighted mean diameter can be calculated using a microscopic picture of the product. Since the volume weighted mean diameter is predominantly determined by the bigger droplets, as a first estimate of the volume weighted mean diameter, which in practice is usually sufficiently accurate, the approximate diameter of the bigger droplets dominating the microscopic pricture, but excluding a rare very big droplet, can be used.

It has been found in the case of our preferred products made, using freshly churned butter as plastic dispersion (A) and as aqueous composition (B) an aqueous gelatin solution acidified to pH 4 and further containing only salt, and sodium benzoate and potassium sorbate as preservatives, that products of excellent stability characteristics, both physically and microbiologically, and having excellent taste and eating qualities very similar to butter, are provided when the droplets of the discontinuous aqueous phase of plastic dispersion (A) have a volume weighted mean diameter that is less than 15 microns, more preferably in the range of 0.1 to 10 microns, and most preferably in the range of 1 to 5 microns. At the same time, "droplets" of the dispersed aqueous phase formed by dispersing the aqueous composition (B) are larger. If these dispersed aqueous droplets are discontinuous, then preferably it has a volume weighed mean diameter that is less than 40 microns and, more preferably, in the range of 1-30 microns.

It has further been found, in the case of our preferred products, that, when preparing them, it is preferred that the temperature of the butter be 15°C-20°C and that the temperature of the gelatin solution be 32°C-38°C at the time they are combined, giving an admixture having a temperature in the range of 15°C-30°C. Gelatin solution temperatures as high as 50°C have been used with success. While fluid solutions of gelatin as low as 25°C have been used, it is important to note that, once the gelatin solution has gelled, the resulting product is grainy and has poor organoleptic qualities. In addition, butter temperature in the range of 8°C-28°C have been successfully used.

According to a further aspect, the present invention provides a method of preparing a low-fat butter spread which comprises the steps of :

a) preparing butter by churning to form a stream of butter of pumpable plastic consistency ;

b) combining the product of step (a) with a stream of aqueous gelatin solution to provide a product stream having butter and gelatin solution ;

c) grossly mixing the product of step (b) ;

d) passing the product of step (c) through a high shear mixer whereby a dispersion of gelatin droplets through a continuous butter phase is achieved, and,

e) allowing the dispersion to cool and set to form a low-fat butter spread.

We do not wish to be bound by theory but we believe that the advantageous properties of the present product are due to the combined action of an aqueous phase with low pH that is free from in particular milk protein, and a discontinuous aqueous phase with higher pH that does contain such protein. It is thought that the protein in the unmodified butter serum promotes the rapid destabilization and flavour release of the product in the mouth. Despite the low pH of the aqueous phase of the aqueous composition (B), the amount of acid contained therein is relatively small. When the dispersion breaks down and the acid is released from said aqueous composition, it is rapidly neutralized by the protein. In addition, because no milk or soy protein is present in the aqueous phase of (B), only a small amount of acid is needed to provide the desired low pH. In any event, no sour taste is perceived. During storage, a substantial proportion of the aqueous phase of the product has a low pH, which is an unfavourable medium for bacteriological growth. Moreover, preservatives such as benzoate and sorbate are optimally active at low pH so that, even at low concentrations, these preservatives can be highly effective. If, however, the aqueous phase of (B) contained milk or soy protein, it would already neutralize the acid before the product destabilized in the mouth and thereby raise the pH. Then aqueous phase (B) would provide a better medium for bacterial growth and, moreover, any preservatives contained therein would be less effective. If, alternatively, the neutralizing action of milk protein of aqueous phase (B) would be compensated by employing more acid to maintain the low pH, then the amount of acid would be so large that the product would taste sour. Accordingly, aqueous phase (B) of the present spread should preferably not contain ingredients with a high butter capacity.

Conventional additives to edible spreads may be used in the spreads of this invention. For example, beta-carotene or annatto can be added to a small amount of fat and dispersed throughout the oil phase to provide a uniform desired colour to the product.

Aqueous composition (B) may contain ingredients in addition to those specifically mentioned therein, but preferably the overall composition of aqueous composition (B) is such that the overall result is a mixture having a low buffer capacity. For example, Batch 4 in Table I below 5.4 m moles of HCl is required to lower the pH of 200 g of an aqueous solution of 1.55% gelatin in de-ionized water, with 1% salt and 0.23% preservative by 1 pH unit. On the other hand, where the aqueous composition (B) consists of 200 g of a solution of skim milk containing 1% salt and 0.23% of the same preservative, 18 m moles of HCl were required to lower the pH by 1 pH unit. This represents a significantly higher buffer capacity.

In the present process, an aqueous phase having a pH higher than 4.7 and containing, for example, milk protein, is included in plastic dispersion (A), which has a relatively high fat content compared with the end-product. For example, margarine, or particularly butter, may be used as dispersion (A). The aqueous phase contained in dispersions with a relatively high fat content such as butter and margarine, usually gives less of a problem with microbiological deterioration than does the aqueous phase contained in low-fat spreads. Very good results are obtained with the present process, in particular also when used for making products with a very low fat content because, we believe, the protein-containing aqueous phase having a relatively high pH is contained in the end-product in substantially the same way as it is contained in the higher fat product dispersion (A). Since aqueous composition (B) does not contain milk protein or the like and has a low pH and, therefore, does not itself give rise to rapid bacterial growth when using, for example, butter as dispersion (A), accordingly a lower fat end-product can be obtained that has substantially similar microbiological storage properties as the butter used as dispersion (A). For these reasons also, we believe, the product can have good microbiological stability even if aqueous phase (B) is a continuous phase.

As mentioned above, an excellent product was obtained with the use of freshly churned butter as edible dispersion (A) and an aqueous gelatin solution having pH 4 and containing salt and preservatives as aqueous composition (B). We have found that, when using as aqueous composition (B) a solution in skim milk instead of in water, it was substantially more difficult to prepare a fat-continuous product. In various trials no fat-continuous product was obtained at all. We believe that this is caused by the surface activity of the milk protein which promotes formation of a water-continuous system. We believe that the milk protein contained in dispersion (A) does not have a similar disruptive effect during the present process because it is enclosed, and thereby inactivated, by the plastic butterfat. Thus, when using butter as dispersion (A), a stable low-fat spread can be prepared that contains milk protein, which gives the product favourable organoleptic properties, without having to resort to the use of added emulsifiers.

It is to be understood, however, that the present process does not exclude the use of added emulsifier. Whereas butter contains various surface active components that provide sufficient emulsifying action to be able to obtain a stable end-product, this may not be the case when using another dispersion (A). For example, if margarine containing only a very small amount of emulsifiers or possibly containing essentially no emulsifier at all is used as dispersion (A), then it is desirable to incorporate emulsifier in the present process. Then preferably partial glycerides, in particular monoglycerides, phosphatides or a mixture thereof is used. The emulsifier can be incorporated by dissolving or dispersing it in the aqueous composition (B) or it can be added separately, for example dissolved or dispersed in a small amount of oil. In certain cases it may be desirable to include such emulsifier even when butter is used as dispersion (A). This may, for example, be the case if the amount of composition (B) to be included is high, for example if the weight ratio of the amounts of composition (B) and dispersion (A) to be used, is higher than 1.

The presence of hydrocolloid in aqueous composition (B) in the present spread is necessary for the physical stability of the product. If no such hydrocolloid is present, the product may nevertheless have a proper fat-continuous phase shortly after its preparation, but within a few days' storage, we have found, the product destabilizes and releases moisture.

Preferably, the hydrocolloid employed is a gelling agent. Gelling agent is preferably employed in an amount higher than the critical concentration of 25°C, i.e. in an amount sufficiently high to cause aqueous composition (B) to gel if left to stand at 25°C. The precise amount of gelling agent employed is not critical ; usually an amount of 1-10 times the critical concentration will be adequate. The optimal concentration will depend to some extent on the gelling agent chosen and on the composition of the other constituents used. The optimal concentration can, however, easily be determined by a few experiments. In practice, the optimal amount of hydrocolloid is likely to lie in the range of from 0.5-15% by weight of aqueous composition (B), in particular in the range of from 1-10% by weight. These ranges not only apply in the case of gelling agents above their critical concentration, but also when using gelling agents below the critical concentration or non-gelling hydrocolloid.

It is preferred, however, to use as hydrocolloid gelling agent above its critical concentration. It is particularly preferred to use gelling agent such that the gel melting point of aqueous composition (B) is less than 35°C. The most preferred results are obtained when using about 3% by weight of gelatin in the aqueous phase of the product.

As salt, common cooking salt, sodium chloride can be used in the product of the present invention. Alternatively, other salt such as KCl or $NH_4Cl$, either alone or in combination with NaCl, may be incorporated in the product. The level used can vary according to taste desired. When it is desired to prepare unsalted low-fat butter spread according to the invention, no salt is added to the butter during the butter-making process. If desired, preservatives may be added in its place, to extend the shelf-life of the product. In this case, salt may also be omitted from the aqueous gelatin solution.

We believe that the melting characteristics of a gelatin gel resemble in many respects those of the plastic fat contained in spreads.

When using gelling agents that cause the gel to have a gel melting point of less than human body temperature, preferably 28°C-35°C, the gelled aqueous phase droplets will melt and release the flavour when the product is put in the mouth. Because the gel melts, the product as perceived in the mouth becomes thinner. Moreover, depending on the melting heat, the melting may give a cool impression in the mouth. We believe that the replacement of plastic fat in spreads by gelled aqueous droplets that melt below body temperature, in order to produce a low-fat spread, therefore, affects the product properties only to a relatively small extent and is easily accepted by the consumer. Particularly advantageous results are obtained with gelatin. We think that this is caused by the similarity of the behaviour in the mouth of gelatin gel particles and plastic fat as commonly present in spreads, and we believe this to be related to the peculiar structure of the gelatin gel.

Conventional additions to butter can also be used in the low-fat butter spread of this invention. For example, beta-carotene or annatto can be added to a small amount of melted butter and dispersed throughout the oil phase to give a uniform yellow colour to the product.

The fat level of the spreads of the present invention can be varied within fairly wide limits, downward from the conventional 80% fat content of butter. A high quality, preferred product, has been prepared containing 40% butterfat. Products containing as little as 26% fat have been prepared with the assistance of lecithin and distilled monoglycerides as emulsifiers.

## EXAMPLES

The invention will be further illustrated in the following Examples :

## EXAMPLE I

A series of 4-5 kg batches of low-fat butter spread were made following the process outlined below. The composition of each batch is given in Table I. The proces will be illustrated with respect to batch 1. The procedure was the same for the remaining batches, with appropriate changes in the level of ingredients.

In preparing batch 1, 2,220 g of lightly salted creamery butter containing 1.75 + .2% NaCl was tempered to 25°C. An aqueous gelatin solution was separately prepared by combining 2,200 g of water with 70.3 g of 225 bloom pork skin type A gelatin and allowing the mixture to stand for about a minute to wet the gelatin. The solution was then warmed to 44°C and stirred until the gelatin was dissolved. 45.4 g of sodium chloride, Morton Extra Fine Number 200, was then added with stirring until it was dissolved in the aqueous gelatin solution. The aqueous solution was then allowed to cool to about 30°C.

The spread was prepared in a Stephan vertical cutter mixer, Model No. 2184, type VCM-12, made by the Stephan Food Technology Corp. of West Germany. The tempered butter was added first, followed by the gelatin solution. The mixer was operated at low speed, 1720 rpm, until the butter was broken into small pieces. The mixer was then operated at high speed, 3400 rpm, until the fat-continuous dispersion formed. The spread was then removed from the mixer, packed into 0.23 kg tubs and allowed to set at 15°C.

In preparing other batches, the acid and preservatives were mixed with the gelatin solution along with the salt.

### TABLE I

| Ingredient | Composition, in % by weight | | | | |
|---|---|---|---|---|---|
| | 1 | 2 | 3 | 4 | 5 |
| Butter, 1.75 + .2% NaCl | 48.95 | 48.95 | 48.95 | 48.95 | 48.95 |
| Water | 48.50 | 48.50 | 48.27 | 48.14 | 48.56 |
| Gelatin | 1.55 | 1.55 | 1.55 | 1.55 | 1.55 |
| Salt | 1.00 | 1.00 | 1.00 | 1.00 | 0.58 |
| Na-benzoate | – | – | 0.10 | 0.10 | 0.10 |
| K-sorbate | – | – | 0.13 | 0.13 | 0.13 |
| Lactic acid | – | to pH 4 | – | 0.13 | 0.13 |
| | | | | (pH 4.2) | (pH 4.2) |

On organoleptic evaluation, it was found that each spread had a highly acceptable flavour, as well as an excellent flavour release and melting qualities in the mouth, and was almost indistinguishable from creamery butter. In those formulations containing acid, i.e. batch numbers 2, 4 and 5, the presence of the acid was discernible to the tasters.

Of the above formulations, batches 1, 3, 4 and 5 were evaluated for their resistance to microbiological spoilage. In conducting these tests, the product was inoculated with mixed cultures containing both bacteria, yeast and moulds known to cause spoilage in low-fat spreads. Two separate pools of organisms were used to prepare inoculums, one containing a mixture of gram-positive bacteria, yeasts and moulds, while a second contained gram-negative organisms.

The inoculum was added to the aqueous gelatin phase during the preparation of the low-fat butter spread. Each batch was separated into four sterile jars, two of which were incubated at 4°C and two at 10°C. One jar was left opened and the other closed.

The products were examined weekly for six weeks and biweekly thereafter. Tests performed at each assay point included standard plate counts and specific tests for yeast/mould, coliform, fecal strep, and Staphylococcus aureus. The product was determined to be spoiled where an increase of any inoculated species was found to be two or more log units.

Formulation 1 showed evidence of spoilage after three days ; Formulation 3 spoiled after four weeks ; Formulation 4, under the same storage conditions, showed no evidence of spoiling after 24 weeks ; and Formulation 5 shows no evidence of spoilage after 10 weeks.

## EXAMPLE 2

A series of 1 kg batches of low-fat butter spreads was made following the process outlined below. In each batch, the gelatin was dissolved in milk at 44°C, and the salt or acid then added and dissolved, where required. All of the ingredients called for in the formulations given in Table II below, in each instance, were added to a Cuisinart food processor, Model No. DLC-7 PRO and mixed at high speed until a water-in-oil emulsion was formed.

### TABLE II

| Ingredient | Composition, in % by weight | | | | |
|---|---|---|---|---|---|
| | 6 | 7 | 8 | 9 | 10 |
| Butter, 1.75 + .2% NaCl | 49.60 | 49.60 | 49.60 | 49.60 | 49.60 |
| Water | – | – | – | – | – |
| Gelatin | 0.80 | 0.80 | 1.55 | 1.55 | 1.80 |
| Salt | – | – | – | – | 0.45 |
| Lactic acid | – | to pH 4 | – | to pH 4 | – |
| Skim milk | 49.60 | 49.60 | 48.85 | 48.85 | – |
| Whole milk | – | – | – | – | 46.00 |

A stable, fat-continuous dispersion was formed in each Batch, except for batch 9, in which a stable, fat-continuous dispersion could not be formed.

Batches 6-8 and 10 formed stable water-in-oil emulsions which were placed into 0.23 kg tubs and allowed to set at 5°C. Organoleptic evaluation of these batches disclosed that batch 7 had a very sour, unpleasant taste, batches 6, 8 and 10 gave good flavoured products.

## EXAMPLE 3

A product having the formulation of batch number 5, Table I, was made on a pilot plant scale. A 10 kg batch was made using lightly salted, fresh, creamery butter having 1.75 + 2.% NaCl tempered to 28°C. A gelatin solution was made following the procedure set forth in Example 1.

The butter was introduced by means of a funnel into a Waukesha® pump, size 3, running at full speed, 1769 rpm, and feeding a static mixer. The static mixer was a Koch® static mixing unit manufactured by the Koch Engineering Company of Wichita, Kansas. The mixture of materials was passed through the static mixer six times.

After mixing in the static mixer, the materials were then fed to a Disho dispersing and homogenizing plant, Type A 60/10, Koruma-Maschinenbau, P. Hauser KG-D-7844, Nevenburg, West Germany. After two passes through the Disho machine, the material was placed in a Groen kettle, Model No. TDC/TA/2-20, a scraped surface cooler. After approximately two minutes' cooling, using 15°C water in a jacket, a fat-continuous dispersion was formed. The product was then placed in 0-23 kg tubs, and allowed to set at 15°C.

Upon tasting, it was found to have a high level of acceptable fresh butter taste with no discernible sour taste.

## EXAMPLE 4

A suitable continuous plant-scale process in accordance with this invention was carried out in a dairy equipped to prepare butter from sweet cream using a continuous churn. Sweet cream having a fat content of 40% was pasteurized, cooled to 11°C and fed into the continuous churn, a Paasch and Silkeborg continuous butter-making machine, Model No. HCT 1A, operated at 2268 kg/hour. The butter was lightly salted by adding 1.75% NaCl, basis butter weight in the working section of the churn. The churn contained a continuous centrifugal separator which removed most of the buttermilk from the cream. After churning, the butter was discharged to one head of a Bran-Lubbe proportioning pump, Type N-C32KA32.

A gelatin solution was made up by dissolving 225 bloom pork skin type A gelatin in water at 44°C to provide 1134 kg of a 3% solution. Sodium chloride of the type used in Example 1, together with sodium benzoate, potassium sorbate and lactic acid, all in sufficient quantities to make a spread having the composition of batch 4 of Table I, were added to the gelatin solution. The gelatin solution was then cooled to 27°C and pumped to a second head of the proportioning pump.

From the proportioning pump, the butter and gelatin solution mixture was directed through a Ross Static Mixer, Type LPD, 4″ in diameter and 36″ in length, which supplies low shear to the composition. Following the pass through the static mixer, the mixer passed through a Mince Master (Registered Trade Mark), Model A, supplied by Griffith Laboratory, Chicago and then through a Disho (Registered Trade Mark) machine in line. Each of these units impart high shear to the mixture, causing formation of a fat-continuous dispersion. After the Disho, the material passes directly to a Votator A unit, 15 cm in diameter x 60 cm long. The product had an exit product temperature of 19°C and was packed as 0.12 kg prints.

On organoleptic evaluation, the product was found to have highly acceptable flavour, nearly indistinguishable from lightly salt, creamery butter, and to have the flavour release and eating qualities of butter in the mouth.

Evaluation of the product of this Example for resistance to microbiological spoilage established that there was no unacceptable change in flavour and no microbiological spoilage after 20 weeks' storage at 15°C.

## EXAMPLE 5

A low-fat butter spread containing emulsifiers was made following the process given in Example 4 above. The composition of the product, expressed in % by weight, was 48.5% lightly salted, fresh, creamery butter, 46.59% water, 1.55% gelatin, 1.00% salt, 0.10% Na-benzoate, 0.13% potassium sorbate, 0.13% lactic acid, 0.3% Myverol® 1892, a mixture of mono- and diglycerides, and 0.2% lecithin, Centrol® Crude Natural Lecithin (Central Soya). The Myverol and lecithin were added by blending them with 1.% additional butter heated to 60°C. This additional blend was metered into the batch through a third head of the Bran-Lubbe proportioning pump.

On evaluation, the product was found to have a highly acceptable flavour.

## EXAMPLE 6

A whipped, low-fat butter spread was prepared by preparing the product described in Example 5 above, and by injecting nitrogen into the product stream just prior to the Votator "A" unit. Sufficient nitrogen was injected to provide a product having a specific gravity of 0.8 as compared with a normal product specific gravity of about 0.95.

The product had excellent flavour and good eating qualities and mouth feel, similar to whipped butter. The amount of nitrogen can be increased to provide a product having a specific gravity of 0.6 or lower, if desired.

## EXAMPLE 7

Several of the products made according to this invention were tested to determine the presence therein of two distinct separate aqueous phases. In this work, three low-fat butter spreads were examined using a temperature-programmed de-emulsification method and measuring the effect on the pH of the liberated water phase.

Sample 1 was a product made following the process outlined in Example 3, having the composition of batch 5 in Table I. It was about three days old when evaluated. Sample 2 was made according to the process of Example 1, and had the composition of batch 4 of Table I. This product was about 1 week old when evaluated. Sample 3 was made generally following the process of Example 4, except that different but equivalent process equipment was used to provide the shear. This sample was four months old.

The method used was as follows :

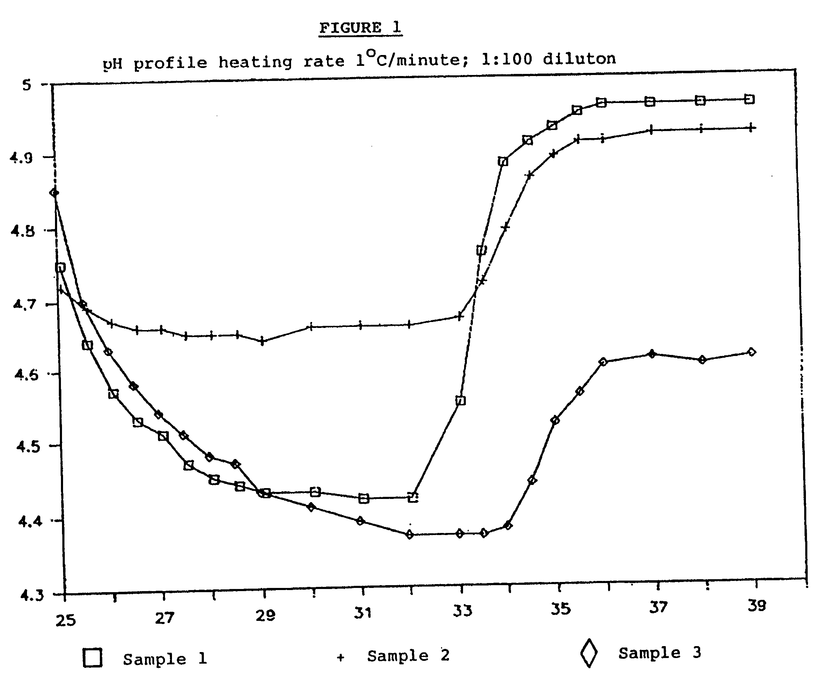

Each sample of low-fat butter spread was mixed with distilled water in the proportion of 1 : 100 in a temperature-controlled cell at 25°C. The pH was registered during a heating programme which raised the temperature of the sample from 25°C to 40°C at the rate of 1°C per minute. The results obtained are summarized in Fig. 1 attached hereto.

It will be noted that up to about 30°C, only the added aqueous gelatin solution phase having a low pH separates from the sample. In the temperature range of 32°C to about 36°C, the original butter serum phase comes free, and the pH increases sharply.

While there are some quantitative differences among the three samples, they can be explained by differences in composition, processing variables and age of sample. It is clear that the products of this invention have two separate aqueous phases.

## Claims

1. Process for preparing an edible spread having a continuous fat phase including the steps of a) forming an admixture of :

i) an edible plastic dispersion (A) comprising a continuous fat phase and a discontinuous aqueous phase, which aqueous phase consists essentially of unmodified serum, and

ii) an edible aqueous composition (B) having a pH at or below 4.7 and containing hydrocolloid, which aqueous composition is substantially free from milk and soy protein, and b) forming a product having a continuous fat phase by subjecting the admixture to a working treatment at a temperature at which the fat phase of the plastic dispersion (A) remains plastic.

2. Process according to Claim 1, wherein the plastic dispersion (A) is margarine or butter of a pumpable plastic consistency.

3. Process according to Claim 1 or 2, wherein the volume weighted mean diameter of the aqueous phase droplets of plastic dispersion (A) is less than 15 microns, preferably 0.1-10 microns, most preferably 1-5 microns.

4. Process according to any one of Claims 1-3, wherein step (a) comprises forming an admixture that constitutes a dispersion having a continuous aqueous phase by combining streams of plastic dispersion (A) and aqueous composition (B) and passing the combined streams through a low shear mixer, and step (b) comprises forming a product having a continuous fat phase by causing the admixture to form a fat-continuous dispersion by subjecting it to a working treatment.

5. Process according to any one of Claims 1-4, wherein the products of step (a) and (b) are at a temperature below 30°C.

6. Process according to any one of Claims 1-5, wherein the product of step (b) contains dispersed aqueous droplets having a volume weighted mean diameter of less than 40 microns.

7. Process according to any one of the preceding Claims, wherein the pH of the unmodified butter serum is above 4.7.

8. Process according to Claim 5, wherein immediately prior to admixture, aqueous composition (B) is at a temperature in the range of 15-50°C.

9. Process of preparing a low-fat butter spread which comprises the steps of :

a) preparing butter by churning to form a stream of butter of pumpable plastic consistency ;

b) combining the product of step (a) with a stream of aqueous gelatin solution to provide a product stream having butter and gelatin solution ;

c) grossly mixing the product of step (b) ;

d) passing the product of step (c) through    high shear mixer, whereby a dispersion of gelatin droplets through a continuous butter phase is achieved, and

e) allowing the dispersion to cool and set to form a low-fat butter spread.

10. A low-fat butter spread having a continuous fat phase and comprising a first discontinuous aqueous phase consisting essentially of unmodified butter serum, and a second discontinuous aqueous phase having a pH at or below 4.7 and containing hydrocolloid, the second aqueous phase being substantially free of milk proteins and soy proteins.

11. A low-fat butter spread according to Claim 10, wherein the first aqueous phase has a pH of above 4.7 and is present as droplets having a volume weighted mean diameter of from 0.1 to 10 microns and the second aqueous phase consists of droplets of which the volume weighted mean diameter is less than 40 microns.

## Ansprüche

1. Verfahren zur Herstellung eines eßbaren Aufstriches mit einer kontinuierlichen Fettphase, das die Stufen einschließt:

a) Bildung einer Mischung aus

i) einer eßbaren plastischen Dispersion (A), die eine kontinuierliche Fettphase und eine diskontinuierliche wäßrige Phase umfaßt, wobei die wäßrige Phase im wesentlichen aus unmodifiziertem Serum besteht, und

ii) einer eßbaren wäßrigen Zusammensetzung (B) mit einem pH von oder unter 4, 7, die ein Hydrokolloid enthält und im wesentlichen von Milch- und Sojaprotein frei ist, und

b) Bildung eines Produktes mit einer kontinuierlichen Fettphase, indem man die Mischung bei einer Temperatur, bei welcher die Fettphase der plastischen Dispersion (A) plastisch bleibt, einer Bearbeitungsbehandlung unterwirft.

2. Verfahren gemäß Anspruch 1, bei welchem die plastische Dispersion (A) Margarine oder Butter einer pumpfähigen, plastischen Konsistenz ist.

3. Verfahren gemäß Anspruch 1 oder 2, bei welchem der volumen-gewichtete mittlere Durchmesser der Tröpfchen der wäßrigen Phase der plastischen Dispersion (A) weniger als 15 µm, vorzugsweise 0,1 bis 10 µm und insbesondere 1 bis 5 µm, beträgt.

4. Verfahren gemäß irgendeinem der Ansprüche 1 bis 3, bei welchem Stufe (a) die Bildung einer Mischung, die eine Dispersion mit einer kontinuierlichen wäßrigen Phase darstellt, durch Kombinieren von Strömen der plastischen Dispersion (A) und der wäßrigen Zusammensetzung (B) und Hindurchleiten der kombinierten Ströme durch einen Mischer mit geringer Scherwirkung umfaßt und Stufe (b) die Bildung eines Produktes mit einer kontinuierlichen Fettphase umfaßt, indem man aus der Mischung, die man einer Bearbeitungsbehandlung unterwirft, eine Dispersion mit kontinuierlicher Fettphase bildet,

5. Verfahren gemäß irgendeinem der Ansprüche 1 bis 4, bei welchem die Produkte aus Stufe (a) und (b) eine Temperatur unter 30°C haben.

6. Verfahren gemäß irgendeinem der Ansprüche 1 bis 5, bei welchem das Produkt von Stufe (b) dispergierte wäßrige Tröpfchen mit einem volumen-gewichteten mittleren Durchmesser unter 40 µm enthält.

7. Verfahren gemäß irgendeinem der vorhergehenden Ansprüche, bei welchem der pH des unmodifizierten Butterserums über 4,7 liegt.

8. Verfahren gemäß Anspruch 5, bei welkem die wäßrige Zusammensetzung (B) unmittelbar vor dem Mischen eine Temperatur im Bereich von 15 bis 50°C hat.

9. Verfahren zur Herstellung eines Butteraufstriches niedrigen Kaloriengehaltes, das die Stufen umfaßt:

a) Herstellen von Butter durch Buttern unter Bildung eines Butterstromes von pumpfähiger, plastischer Konsistenz,

b) Kombinieren des Produktes von Stufe (a) mit einem Strom einer wäßrigen Gelatinelösung zur Bildung eines Butter und Gelatinelösung aufweisenden Produktstromes,

c) grobes Mischen des Produktes von Stufe (b))

d) Hindurchleiten des Produktes von Stufe (c) durch einen Mischer hoher Scherwirkung, wodurch eine Dispersion von Gelatinetröpfchen innerhalb einer kontinuierlichen Butterphase erzielt wird, und

e) Abkühlenlassen der Dispersion und Absetzenlassen zur Bildung eines Butteraufstriches niedrigen Kaloriengehaltes.

10. Butteraufstrich niedrigen Kaloriengehaltes mit einer kontinuierlichen Fettphase, der eine erste diskontinuierliche wäßrige Phase, die im wesentlichen aus unmodifiziertem Butterserum besteht, und eine zweite diskontinuierliche wäßrige Phase mit einem pH von oder unter 4,7, die ein Hydrokolloid enthält, umfaßt, wobei die zweite wäßrige Phase von Milchproteinen und Sojaproteinen im wesentlichen frei ist.

11. Butteraufstrich niedrigen Kaloriengehaltes gemäß Anspruch 10, in welchem die erste wäßrige Phase einen pH über 4,7 hat und als Tröpfchen mit einem volumen-gewichteten mittleren Durchmesser von 0,1 bis 10 um vorliegt und die zweite wäßrige Phase aus Tröpfchen besteht, deren volumengewichteter mittlerer Durchmesser unter 40 µm liegt.

## Revendications

1. Procédé de préparation d'une matière à tartiner comestible comportant une phase graisseuse continue, comprenant les étapes qui consistent a) à former un mélange :

i) d'une dispersion plastique comestible (A) comprenant une phase graisseuse continue et une phase aqueuse discontinue, cette phase aqueuse étant essentiellement constituée d'un sérum non modifié, et

ii) d'une composition aqueuse comestible (B) ayant un pH inférieure ou égal à 4,7 et contenant un hydrocolloïde, cette composition aqueuse étant essentiellement exempte de protéine de lait et de soja, et b) à former un produit comportant une phase graisseuse continue en soumettant le mélange à un traitement de manipulation, à une température à laquelle la phase graisseuse de la dispersion plastique (A) demeure plastique.

2. Procédé selon la revendication 1, dans lequel la dispersion plastique (A) est une margarine ou un beurre de consistance plastique pompable.

3. Procédé selon la revendication 1 ou 2, dans lequel le diamètre moyen pondéré en volume des gouttelettes de phase aqueuse de la dispersion plastique (A) est inférieur à 15 microns, de préférence de 0,1-10 microns, mieux encore de 1-5 microns.

4. Procédé selon l'une quelconque des revendications 1-3, dans lequel l'étape (a) consiste à former un mélange qui constitue une dispersion comportant une phase aqueuse continue en combinant des courants de dispersion plastique (A) et de composition aqueuse (B) et en faisant passer les courants combinés à travers un malaxeur à faible cisaillement, et l'étape (b) consiste à former un produit comportant une phase graisseuse continue en faisant en sorte que le mélange forme une dispersion continue en graisse en le soumettant à un traitement de manipulation.

5. Procédé selon l'une quelconque des revendications 1-4, dans lequel les produits de l'étape (a) et de l'étape (b) sont à une température inférieure à 30°C.

6. Procédé selon l'une quelconque des revendications 1-5, dans lequel le produit de l'étape (b) contient des gouttelettes aqueuses dispersées ayant un diamètre moyen pondéré en volume inférieur à 40 microns.

7. Procédé selon l'une quelconque des revendications précédentes, dans lequel le pH du sérum de beurre non modifié est supérieur à 4,7.

8. Procédé selon la revendication 5, dans lequel, immédiatement avant le mélange, la composition aqueuse (B) est à une température dans l'intervalle de 15-50°C.

9. Procédé de préparation d'une matière à tartiner à base de beurre allégée en graisse, qui comprend les étapes qui consistent à :

a) préparer le beurre en le barattant pour former un courant de beurre de consistance plastique pompable ;

b) combiner le produit de l'étape (a) avec un courant de solution aqueuse de gélatine pour obtenir un courant de produit comportant le beurre et la solution de gélatine ;

c) mélanger grossièrement le produit de l'étape (b) ;

d) faire passer le produit de l'étape (c) à travers un malaxeur à fort cisaillement, pour obtenir une dispersion de gouttelettes de gélatine dans une phase de beurre continue, et

e) laisser refroidir et durcir la dispersion pour former une matière à tartiner à base de beurre allégée en graisse.

10. Matière à tartiner à base de beurre allégée en graisse comportant une phase graisseuse continue et comprenant une première phase aqueuse discontinue essentiellement–constituée de sérum de beurre non modifié, et une seconde phase aqueuse discontinue ayant un pH inférieur ou égal à 4,7 et contenant un hydrocolloïde, la seconde phase aqueuse étant essentiellement exempte de protéines de lait et de protéines de soja.

11. Matière à tartiner à base de beurre allégée en graisse selon la revendication 10, dans laquelle la première phase aqueuse a un pH supérieur à 4,7 et est présente sous forme de gouttelettes ayant un diamètre moyen pondéré en volume de 0,1 à 10 microns et la seconde phase aqueuse est constituée de gouttelettes dont le diamètre moyen pondéré en volume est inférieur à 40 microns.

## FIGURE 1

pH profile heating rate 1$^O$C/minute; 1:100 diluton

Sample 1    + Sample 2    ◇ Sample 3